# EUROPEAN PATENT SPECIFICATION

(11) **EP 3 434 574 B1**
(45) Date of publication and mention of the grant of the patent: **13.05.2020**
(21) Application number: 17193433.4
(22) Date of filing: 27.09.2017
(51) Int. Cl.: B62M 6/90, B62K 19/30

(54) **BICYCLE FRAME FOR DUAL BATTERIES**
FAHRRADRAHMEN FÜR DOPPELBATTERIEN
CADRE DE BICYCLETTE POUR BATTERIES DOUBLES

(30) Priority: 26.07.2017 TW 106210978 U
(43) Date of publication of application: 30.01.2019
(73) Proprietor: ASTRO ENGINEERING CO., LTD, Changhua Hsien 500 (TW)
(72) Inventor: Hu, Samuel, 500 Changhua City, Changhua Hsien (TW); Liu, Liu Cheng, 500 Changhua City, Changhua Hsien (TW); Chen, Chang-Chun, 500 Changhua City, Changhua Hsien (TW)
(74) Representative: Reiser & Partner Patentanwälte mbB

(56) References cited:
- EP-A1- 2 323 896
- AT-A1- 514 406
- DE-A1-102011 005 520
- JP-A- 2003 182 668

## Description

The present invention relates to an electric bicycle, and more particularly to a bicycle frame that is suitable for assembly of dual batteries.

Conventional battery assembling manners for electric bicycles are mainly classified into an embedding manner and an inserting manner. Each one of the TW Patent No. 370069, TW Patent No. 1424934, and TW Patent No. M316210 discloses a battery assembling structure which mainly has a rectangular slot formed in a peripheral surface of one of multiple tube members of a bicycle frame. A size of the slot is larger than a size of a battery set. The battery set is directly embedded in the slot for integrally assembling the battery set to the bicycle frame. Formed by cutting the tube member, the rectangular slot diminishes rigidity of the bicycle frame and causes negative influence on durability and safety of the bicycle frame.

Furthermore, each one of the TW Patent No. M367142, TW Patent No. M389675, and TW Patent No. M430032 discloses a battery assembling structure which mainly has the battery assembled inside one of the tube members of the bicycle frame. The corresponding tube member has two opposite ends and an opening formed at one of the two opposite ends of the tube member for inserting a rod-shaped battery to hide the battery inside the corresponding tube member of the bicycle frame. Since the battery is axially inserted into the corresponding tube member, the shape of the corresponding tube member has to be specifically designed in accordance with the shape of the battery, raising machining complexities and cost of manufacture.

To overcome the shortcomings of the conventional battery assembling structure of the electric bicycle, the present invention provides a bicycle frame for dual batteries to mitigate or obviate the aforementioned problems.

JP 2003 182 668 A describes a bicycle frame with batteries in accordance with the first part of claim 1. The frame contains a tube which has an inserting opening formed at one of the two ends of the tube body.

AT 514 406 A1 describes a bicycle frame having a lateral recess formed at the peripheral surface of the frame.

The main objective of the present invention is to provide a bicycle frame that is able to receive dual batteries and has a rib for intensifying stiffness of the bicycle frame.

The problem underlying the invention is solved by a bicycle frame according to claim 1.

The bicycle frame comprises a tube member, a first battery, and a second battery. The tube member has a tube body and a reinforcing rib integrally formed on the tube body. The tube body has an inserting opening and an embedding opening. The inserting opening is formed at an end of the tube body. The embedding opening is formed through a peripheral surface of the tube body. The reinforcing rib divides the inside of the tube body into a first receiving recess communicating with the inserting opening, and a second receiving recess communicating with the embedding opening. The first battery passes through the inserting opening and is received in the first receiving recess. The second battery passes through the embedding opening and is received in the second receiving recess.

Other objects, advantages, and novel features of the invention will become more apparent from the following detailed description when taken in conjunction with the accompanying drawings.

### IN THE DRAWINGS:

- Fig. 1: is a perspective view of a bicycle frame in accordance with the present invention;
- Fig. 2: is an exploded perspective view of the bicycle frame in Fig. 1;
- Fig. 3: is a cross-sectional side view of the bicycle frame in Fig. 1; and
- Fig. 4: is another cross-sectional side view of the bicycle frame in Fig. 1.

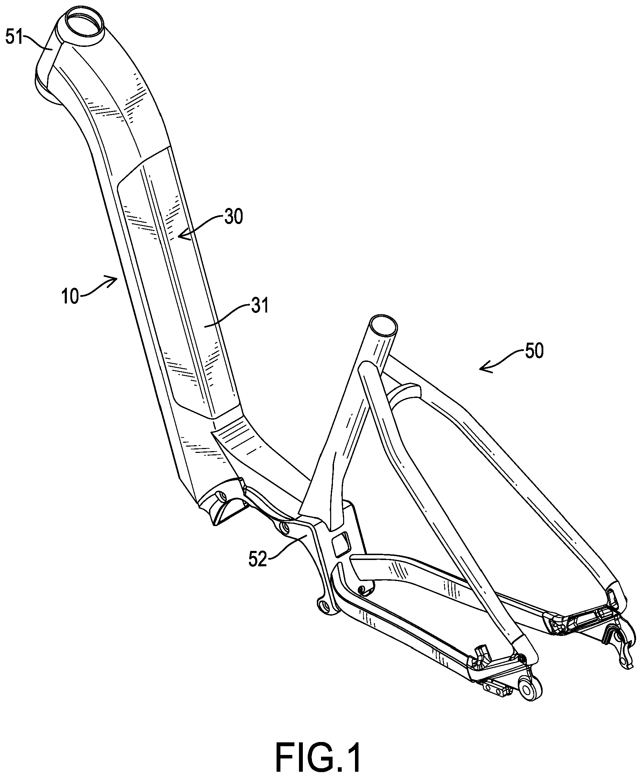

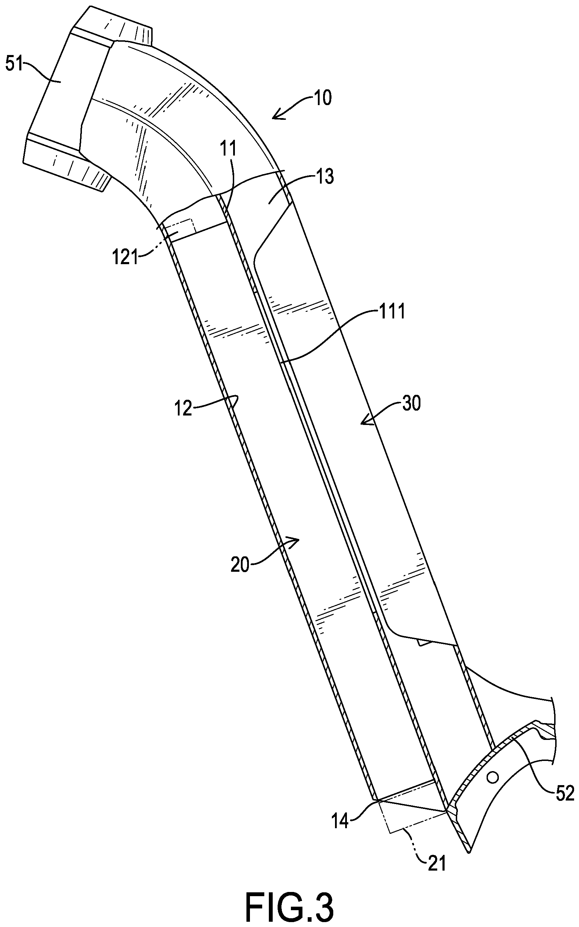

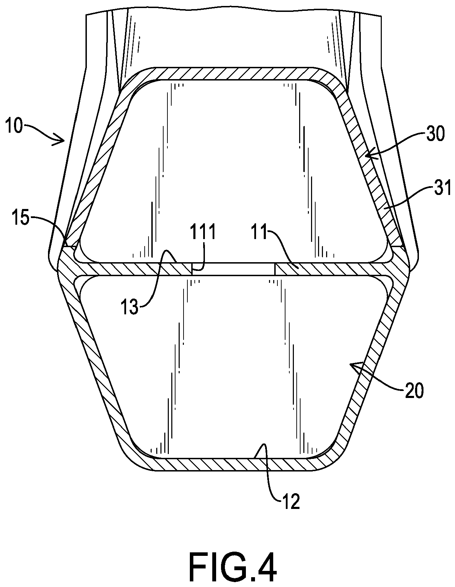

The present invention provides a bicycle frame 50 for dual batteries. The bicycle frame 50 has multiple tube members 10 and two batteries received in one of the tube members 10. With reference to Figs. 1 to 4, the two batteries are a first battery 20 and a second battery 30. The first battery 20 and the second battery 30 are received in one of the tube members 10. In the embodiment of the present invention, the corresponding tube member 10 is a down tube that is hollow and inclined. The corresponding tube member 10 has a tube body and a reinforcing rib 11. The tube body has a lengthwise direction, a peripheral surface, two ends, an inserting opening 14, and an embedding opening 15. The two ends are opposite each other in the lengthwise direction of the tube body and are a first end and a second end. The first end of the tube body of the corresponding tube member 10 is lower than the second end of the tube body of the corresponding tube member 10. The first end of the tube body is connected to a supporting seat 52 for mounting a motor. The second end of the tube body is connected to a head tube 51.

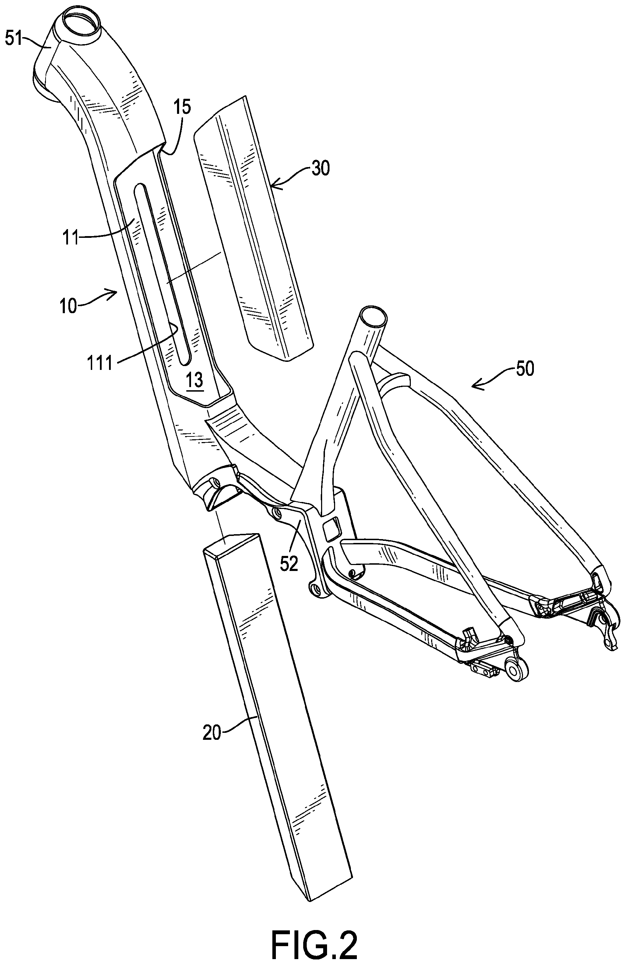

With reference to Figs. 2, 3, and 4, the reinforcing rib 11 is integrally formed on the tube body of the corresponding tube member 10, extends along the lengthwise direction of the tube body, and divides the inside of the tube body into a first receiving recess 12 and a second receiving recess 13. The reinforcing rib 11 has at least one slot 111 communicating with the first receiving recess 12 and the second receiving recess 13. The at least one slot 111 not only reduces the weight of the tube member 10, but also increases the flexibility of the reinforcing rib 11.

The first receiving recess 12 is disposed below the second receiving recess 13, and has a limiting unit 121 disposed adjacent to the second end of the tube body of the corresponding tube member 10. The limiting unit 121 is designed for blocking the first battery 20 and preventing the first battery 20 from being inserted too deep into the first receiving recess 12. The limiting unit 121 may be implemented as a blocking tab, a blocking protrusion, or a bolt.

The first receiving recess 12 may further have a guiding rail formed on an inner surface of the first receiving recess 12 and a receiving groove formed in the inner surface of the first receiving recess 12 for receiving brake lines or other wiring.

The inserting opening 14 is formed at the first end of the tube body for inserting batteries. The inserting opening 14 communicates with the first receiving recess 12. The embedding opening 15 is formed through an upper part of the peripheral surface of the tube body and utilized for embedding batteries.

The first battery 20 is bar-shaped. The first battery 20 passes through the inserting opening 14 and is received in the first receiving recess 12. The bicycle frame 50 has a locking unit 21. The locking unit 21 is fixed in and covers the inserting opening 14. The first battery 20 is inserted into and hidden in the first receiving recess 12 and is electrically connected to the motor by the locking unit 21 or other lines.

The second battery 30 is shaped as an elongated box and has a cover 31. The second battery 30 passes through the embedding opening 15 and then is embedded in the second receiving recess 13. The cover 31 fits in an edge of the embedding opening 15. The second battery 30 may be fully hidden or partially hidden in the corresponding tube member 10. The second battery 30 is electrically connected to the motor by a respective plug or a respective line. Assembling manners of the first receiving recess 12 and the second receiving recess 13 may be adjusted or altered. For example, the first battery 20 and the second battery 30 may be both mounted in the tube member 10 by inserting. Alternatively, the first battery 20 and the second battery 30 may be both mounted in the tube member 10 by embedding. Or the first battery 20 is received in the tube member 10 by embedding, and the second battery 30 is received in the tube member 10 by inserting.

The first battery 20 and the second battery 30 hidden in one of the tube members 10 of the bicycle frame 50 maintains integrity and smoothness of appearance of the bicycle frame 50 and promotes the aesthetical appeal. The second battery 30 is mounted in the second receiving recess 13 by embedding and is easy and convenient for replacement. The second battery 30 may be optionally removed for reducing weight of the bicycle frame 50 and the embedding opening 15 may be covered by the cover 31 of the second battery 30.

## Claims

1. A bicycle frame (50) which comprises:
a tube member (10) being hollow and having
a tube body having
a lengthwise direction;
a peripheral surface;
two ends opposite each other in the lengthwise direction of the tube body;
an inserting opening (14) formed at one of the two ends of the tube body; a first battery (20) passing through the inserting opening (14) and received in the first receiving recess (12);
**characterized in that** the bicycle frame further comprises,
an embedding opening (15) formed through the peripheral surface of the tube body, a reinforcing rib (11) integrally formed on the tube body, extending along the lengthwise direction of the tube body, and dividing an inside of the tube body into:
- a first receiving recess (12) communicating with the inserting opening (14) and
- a second receiving recess (13) communicating with the embedding opening (15),
wherein a second battery (30) passing through the embedding opening (15) is received in the second receiving recess (13),
and wherein the reinforcing rib (11) has at least one slot (111) communicating with the first receiving recess (12) and the second receiving recess (13).

2. The bicycle frame (50) according to claim 1, wherein
the tube member (10) is a down tube and is inclined;
the two ends of the tube body of the tube member (10) are a first end and a second end; and
the first end of the tube body of the tube member (10) is lower than the second end of the tube body of the tube member (10).

3. The bicycle frame (50) according to claim 1 or 2, wherein
the first receiving recess (12) is disposed below the second receiving recess (13);
the inserting opening (14) is disposed at the first end of the tube body of the tube member (10); and
the embedding opening (15) is disposed at an upper part of the peripheral surface of the tube body.

4. The bicycle frame (50) according to any one of claims 1 to 3, wherein
the first receiving recess (12) has a limiting unit (121) disposed adjacent to the second end of the tube body of the tube member (10);
the first battery (20) is restricted by the limiting unit (121);
the bicycle frame (50) has a locking unit (21) disposed adjacent to the first end of the tube body of the tube member (10); and
the first battery (20) is locked by the locking unit (21).

5. The bicycle frame (50) according to any one of claims 1 to 4, wherein the second battery (30) has a cover (31) fitted in the embedding opening (15).

## Patentansprüche

1. Ein Fahrradrahmen (50), umfassend:
ein Rohrelement (10), das hohl ist und
einen Rohrkörper aufweist,
welcher eine Längsrichtung aufweist
sowie eine Umfangsfläche;
zwei Enden, die einander in der Längsrichtung des Rohrkörpers gegenüberliegen;
eine Einführungsöffnung (14), die an einem der zwei Enden des Rohrkörpers gebildet ist;
eine erste Batterie (20), die durch die Einführungsöffnung (14) eingesetzt ist und in der ersten Aufnahmeausnehmung (12) aufgenommen ist;
**dadurch gekennzeichnet, dass** der Fahrradrahmen ferner eine Einbettungsöffnung (15) umfasst, die durch die Umfangsfläche des Rohrkörpers gebildet ist, sowie eine Verstärkungsrippe (11), die einstückig mit dem Rohrkörper ausgebildet ist, sich entlang der Längsrichtung des Rohrkörpers erstreckt und ein Inneres des Rohrkörpers aufteilt in:
- eine erste Aufnahmevertiefung (12), die mit der Einführungsöffnung (14) verbunden ist, und
- eine zweite Aufnahmevertiefung (13), die mit der Einbettungsöffnung (15) verbunden ist,
wobei eine zweite Batterie (30), welche durch die Einbettungsöffnung (15) eingesetzt ist, in der zweiten Aufnahmevertiefung (13) aufgenommen ist,
und wobei die Verstärkungsrippe (11) mindestens einen Schlitz (111) aufweist, welcher mit der ersten Aufnahmevertiefung (12) und der zweiten Aufnahmevertiefung (13) verbunden ist.

2. Fahrradrahmen (50) nach Anspruch 1, wobei
das Rohrelement (10) ein Unterrohr ist und geneigt ist;
die zwei Enden des Rohrkörpers des Rohrelements (10) ein erstes Ende und ein zweites Ende sind; und
das erste Ende des Rohrkörpers des Rohrelements (10) tiefer liegt als das zweite Ende des Rohrkörpers des Rohrelements (10).

3. Fahrradrahmen (50) nach Anspruch 1 oder 2, wobei
die erste Aufnahmevertiefung (12) unterhalb der zweiten Aufnahmevertiefung (13) angeordnet ist;
die Einführungsöffnung (14) an dem ersten Ende des Rohrkörpers des Rohrelements (10) angeordnet ist; und
die Einbettungsöffnung (15) an einem oberen Teil der Umfangsfläche des Rohrkörpers angeordnet ist.

4. Fahrradrahmen (50) nach einem der Ansprüche 1 bis 3, wobei
die erste Aufnahmevertiefung (12) eine Begrenzungseinheit (121) aufweist, welche benachbart zu dem zweiten Ende des Rohrkörpers des Rohrelements (10) angeordnet ist;
die erste Batterie (20) durch die Begrenzungseinheit (121) begrenzt ist; der Fahrradrahmen (50) eine Verriegelungseinheit (21) aufweist, welche benachbart zu dem ersten Ende des Rohrkörpers des Rohrelements (10) angeordnet ist; und
die erste Batterie (20) durch die Verriegelungseinheit (21) verriegelt ist.

5. Fahrradrahmen (50) nach einem der Ansprüche 1 bis 4, wobei die zweite Batterie (30) eine Abdeckung (31) aufweist, welche in die Einbettungsöffnung (15) eingepasst ist.

## Revendications

1. Cadre de bicyclette (50) qui comprend :
un élément tubulaire (10) étant creux et ayant
un corps de tube ayant
un sens longitudinal ;
une surface périphérique ;
deux extrémités opposées l'une à l'autre dans le sens longitudinal du corps de tube ;
une ouverture d'insertion (14) formée à l'une des deux extrémités du corps de tube ;
une première batterie (20) passant à travers l'ouverture d'insertion (14) et
reçue dans le premier évidement de réception (12) ;
**caractérisé en ce que** le cadre de bicyclette comprend en outre, une ouverture d'incorporation (15) formée à travers la surface périphérique du corps de tube, une nervure de renfort (11) formée intégralement sur le corps de tube, s'étendant le long du sens longitudinal du corps de tube, et divisant un intérieur du corps de tube en :
- un premier évidement de réception (12) communiquant avec l'ouverture d'insertion (14) et
- un second évidement de réception (13) communiquant avec l'ouverture d'incorporation (15),
dans lequel une seconde batterie (30) passant à travers l'ouverture d'incorporation (15) est reçue dans le second évidement de réception (13),
et dans lequel la nervure de renfort (11) a au moins une fente (111) communiquant avec le premier évidement de réception (12) et le second évidement de réception (13).

2. Cadre de bicyclette (50) selon la revendication 1, dans lequel
l'élément tubulaire (10) est un tube diagonal et est incliné ;
les deux extrémités du corps de tube de l'élément tubulaire (10) sont une première extrémité et une seconde extrémité ; et
la première extrémité du corps de tube de l'élément tubulaire (10) est plus basse que la seconde extrémité du corps de tube de l'élément tubulaire (10).

3. Cadre de bicyclette (50) selon la revendication 1 ou 2, dans lequel
le premier évidement de réception (12) est disposé sous le second évidement de réception (13) ;
l'ouverture d'insertion (14) est disposée à la première extrémité du corps de tube de l'élément tubulaire (10) ; et
l'ouverture d'incorporation (15) est disposée au niveau d'une partie supérieure de la surface périphérique du corps de tube.

4. Cadre de bicyclette (50) selon une des revendications 1 à 3, dans lequel
le premier évidement de réception (12) a une unité de limitation (121) disposée adjacente à la seconde extrémité du corps de tube de l'élément tubulaire (10) ;
la première batterie (20) est restreinte par l'unité de limitation (121) ;
le cadre de bicyclette (50) a une unité de verrouillage (21) disposée adjacente à la première extrémité du corps de tube de l'élément tubulaire (10) ; et
la première batterie (20) est verrouillée par l'unité de verrouillage (21).

5. Cadre de bicyclette (50) selon une des revendications 1 à 4, dans lequel
la seconde batterie (30) a un couvercle (31) installé dans l'ouverture d'incorporation (15).
